# EUROPEAN PATENT SPECIFICATION

(11) **EP 1 699 171 B1**
(45) Date of publication and mention of the grant of the patent: **02.02.2011**
(21) Application number: 05290495.0
(22) Date of filing: 04.03.2005
(51) Int. Cl.: H04L 12/26, H04L 12/28, H04L 12/24, H04M 3/30

(54) **Test system and test method for broadband telecommunications**
Testsystem und Testverfahren zur Zugangstelekommunikation
Système de test et procédé pour tester les télécommunications à large bande

(43) Date of publication of application: 06.09.2006
(73) Proprietor: Alcatel Lucent, 75008 Paris (FR)
(72) Inventor: Defoort, Frank Cyriel Michel, 9150 Kruibeke-Bazel (BE)
(74) Representative: Narmon, Gisèle Marie Thérèse

(56) References cited:
- WO-A-01/93549
- FR-A- 2 825 545

## Description

The present invention relates to a method for testing the physical layer of a broadband installation at subscriber's house by means of a broadband test device coupled to said subscriber's house through a broadband connection and so adapted to perform measurements on said broadband installation.

Such a method is already known in the art and can for instance be used in a telecommunication system comprising a broadband test device or Network Analyzer of the type "Alcatel™ 5530" coupled to the subscriber's broadband connection. A description of the Alcatel 5530 Network Analyzer is for instance available at the site:
< http://www.alcatel.com/products/productsummary.jhtml?relativePath=/ com/en/appxml/opgproduct/alcate15530networkanalyzertcm228121701635 .jhtml >

The known method is used for detecting wiring issues into the houses of the subscribers or end-users from the operator's Central Office [CO]. Examples of such issues are forgotten filters to separate Plain Old Telephone Service [POTS] from Digital Subscriber Line [DSL] signals, badly twisted pair picking up radiated noise, bridged taps, and bad contacts. Actual faults and issues in the physical layer or wiring between the CO and end-user are to certain extend tolerated as long as, for instance, High Speed Internet is running. However, such faults and issues may lead to consequences as lower bitrate than expected, instable lines requiring resynchronization and/or unacceptable error rate on high demanding applications such as video, audio streaming, and gaming running over it. Many of those faults and issues are located inside the houses of the end-users and there is today no push to clean up in-house wiring.

The Network Analyzer used today is an operator-controlled tool able to detect several cabling issues in the houses of the end-users. After detection of in-house cabling problems, it is still up to the operator to take initiative to get the issues resolved, what is on cost of high Operational Expenses [OPEX]. For some operators, this OPEX may become too high, so that they charge end-users to solve an in-house broadband connection wiring problem.

An object of the present invention is to provide a method of the above known type but which enables detecting and solving physical wiring faults and issues in the houses of the broadband connection subscribers or end-users at relatively low expenses.

According to the invention, this object is achieved due to the fact that said method comprises the step of allowing an end-user at the subscriber's house to dialog with said broadband test device through a responder device, said dialog comprising vocal information received from said end-user and translated by said responder device into input control for said broadband test device and output control from said broadband test device translated by said responder device into vocal instructions towards said end-user, and that said dialog is set-up by said end-user transmitting vocal information towards said responder device.

In this way, the test service to solve issues, generally belonging to the operator's expertise domain, is now applied remotely and performed with help of the end-user. The end-user exchanges information and instructions with the broadband test device whereby the operator's OPEX is reduced. In other words, means are provided to the end-user to solve himself problems that otherwise the operator needs to solve.

It is to be noted that the Patent Application FR-A-2 825 545 (CONVERGE ONLINE) entitled "Remote terminal network connection fault diagnostic system uses automatic phone link" and published on December 6, 2002, also discloses a method for testing the physical layer of a telecommunication installation. In more detail, this known document relates to a remote terminal network connection fault diagnostic system that executes control tests from a diagnostic module in the terminal and sends the results as a sound sequence over a telephone line to a fault management unit with a voice server that sends a voice description of the diagnosis and solution.

However, the network connection fault diagnostic system or test device disclosed in this known document is not a broadband test device. Furthermore, the method disclosed therein is started by an end-user setting-up a dialog with network device, but rather by a diagnostic module performing a test. Finally, this first method step is also not performed by transmitting vocal information from the end-user towards the network device, but by the diagnostic device transmitting DTMF signals. The known installation has thereby the disadvantage of requiring a diagnostic module at the end-user side.

Also the Patent Application WO 01/93549 A (NOKIA INC) entitled "System and Method for Testing Digital Subscriber Lines" and published on December 6, 2001, discloses a similar testing method. In more detail, this other known document relates to a loop management device for testing a communication path for digitalsubscriber line signals that includes a loop access device that is coupled in the communication path between a DSL access multiplexer (DSLAM) and a DSL modem located at a customer premises. The loop management device also includes a controller coupled to the loop access device. The controller communicates with a remote test interface that is coupled in the communication path between the loop management device and the DSL modem. The controller communicates with the remote test interface using voice-band signals transmitted over the communication path and tests the communication path in collaboration with the remote test interface.

Again this known document do not disclose nor teach the features of the present invention.

Another characterizing embodiment of the present invention is that said method comprises the step of said broadband test device performing measurements on said broadband installation in accordance with said output control and/or input control translated into vocal instructions and/or from vocal information respectively.

The information and instructions exchanged between the end-user and the broadband network analyzer allows the latter to perform measurements on the broadband installation via the broadband connection and based on these exchanges.

Also another characterizing embodiment of the present invention is that said method comprises the step of establishing the dialog between said end-user and said responder device via a narrowband connection, and that said responder device is a narrowband responder device.

The physical layer of the subscriber's broadband connection is preferably tested by means of using the narrowband connection or channel through which the dialog is established.

Preferably, the dialog is transmitted through the narrowband connection since the present testing method may not work well when for instance voice-over-broadband is used. This service could then be interrupted during broadband testing.

Yet another characterizing embodiment of the present invention is that said narrowband responder device is coupled to said narrowband connection via a Local Exchange.

This Local Exchange may further be coupled to a narrowband network.

The present invention has a further embodiment **characterized in that** said narrowband connection and said broadband connection use the same physical medium.

In this way, the narrowband connection and the broadband connection may share a same medium, but in different frequency spectrum.

In a variant characterizing embodiment of the present invention, said narrowband connection and said broadband connection use a different physical medium

The end-user connects to the broadband and narrowband service not necessarily over a same twisted pair.

In a preferred characterizing embodiment of the present invention, said broadband connection is a Digital Subscriber Line.

A further characterizing embodiment of the present invention is that said narrowband connection is a Plain Old Telephone Service line or a mobile phone connection.

A subscriber having both a broadband Digital Subscriber Line [DSL] and a narrowband connection, e.g. Plain Old Telephone Service [POTS] or mobile [GSM], connects to the broadband and narrowband service such that the end-user can test himself the physical layer of his broadband connection by getting automated guidance over the narrowband connection.

The present invention also relates to a telecommunication test system for testing the physical layer of a broadband installation at subscriber's house, said test system having a broadband test device coupled to said subscriber's house through a broadband connection and so adapted to perform measurements on said broadband installation.

Such a telecommunication test system is generally known in the art and may for instance use the known method mentioned above with the drawback of having the operator to fully control the broadband test device.

A further object of the present invention is to provide a telecommunication test system of the known type but which enables detecting and solving physical wiring faults and issues in the houses of the broadband connection subscribers or end-users at relatively low expenses.

According to the invention, this further object is achieved owing to the fact that said telecommunication test system further comprises a responder device coupled to said broadband test device and adapted to exchange vocal messages with an end-user at the subscriber's house, said responder device being adapted to translate vocal information received from said end-user into input control for said broadband test device, and to translate output control from said broadband test device into vocal instructions towards said end-user.

In this way, output control of the broadband test device is transmitted as instructions to the end-user, whilst information of this end-user is transferred as input control to the broadband test device. The broadband test device can thereby detect several cabling issues in the house of the end-user as will be explained later. In other words, an end-user himself can initiate and control broadband physical layer tests. As a result, the service satisfaction with the end-user is increased, whilst the OPEX of the DSL operators is reduced.

The present invention further also relates to a responder device for the above telecommunication test system according to the invention.

Further characterizing embodiments of the present test system and method to test the physical layer of a subscriber's broadband connection are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

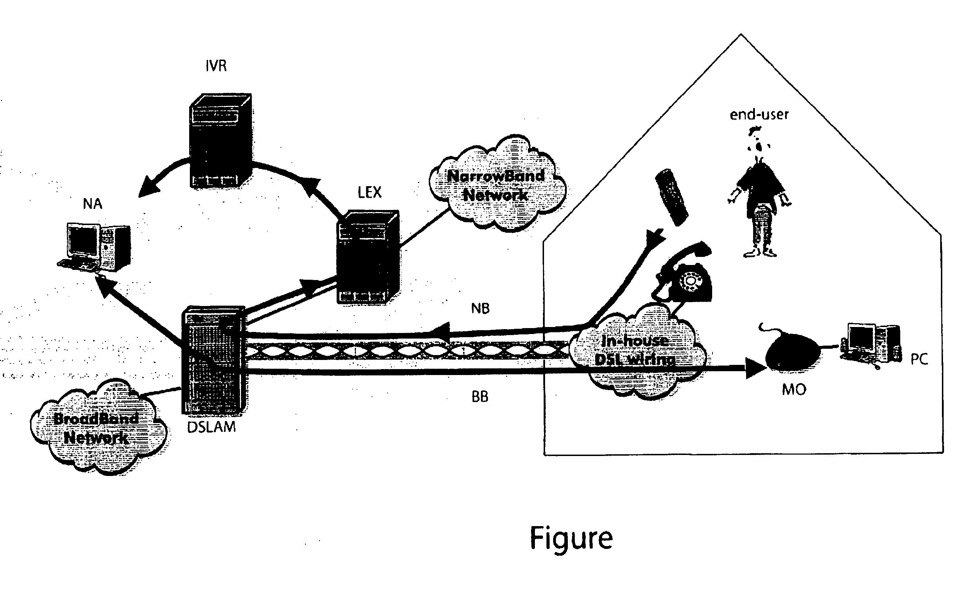

The above and other objects and features of the invention will become more apparent and the invention itself will be best understood by referring to the following description of an embodiment taken in conjunction with the accompanying drawings wherein the Figure represents a telecommunication test system according to the invention.

The telecommunication test system shown in the Figure comprises a broadband test device or network analyzer NA coupled to a subscriber's house via a Digital Subscriber Line Access Multiplexer DSLAM and a broadband connection BB. The broadband connection BB is preferably a Digital Subscriber Line [DSL] associated to a narrowband connection NB also coupling the DSLAM to the subscriber's house. The latter subscriber's house has at least a phone set coupled to the narrowband connection NB as well as an in-house DSL wiring or broadband architecture to which are connected DSL devices such as a modem MO and an a PC. The broadband connection BB is further connected to a BroadBand Network via the DSLAM, whilst the narrowband connection NB is connected to a NarrowBand Network via the DSLAM and a Local EXchange LEX. The telecommunication test system is completed with a narrowband responder device IVR coupled between the local exchange LEX and the network analyzer NA.

The network analyzer NA and the narrowband responder device IVR are located at the operator's side or Central Office [CO] of the telecommunication system. The network analyzer is for instance of the type "Alcatel™ 5530", whilst the narrowband responder device IVR may be an Intelligent Voice Responder of the type "Alcatel™ 8855 IVR". The responder device IVR is adapted to establish a dialog between the network analyzer NA and an end-user at the subscriber's house in order to perform tests on the physical layer of the broadband installation at subscriber's house.

To this end, the narrowband responder device IVR exchanges vocal messages with the end-user. IVR translates vocal information received from the end-user into input control for the broadband test device NA and to translates output control from the broadband test device NA into vocal instructions towards the end-user. The end-user can so communicate with the NA through the IVR. The broadband test device or network analyzer NA may for instance guide, via the responder device IVR, the end-user through different tests and may give the end-user advice on how to fix in-house cabling problems.

It is to be noted that, although vocal messages, vocal information and vocal instructions are mentioned above, the present invention applies also to other types of messages, information and/or instructions. In other words, a person skilled in the art may easily extend the exchange over the narrowband connection to any type of interface using for instance websites or emails. These variants will therefore not be described more in detail below.

A typical scenario could be as follows:
- the end-user calls the network analyzer NA over the narrowband connection NB and via the responder device IVR;
- the network analyzer NA starts tests, preferably broadband tests, over the broadband connection BB;
- the network analyzer NA collects test results through the broadband connection BB and provides them to the end-user over the narrowband connection NB and via the responder device IVR; and
- the network analyzer NA provides fixing advice to the end-user over the narrowband connection NB and via the responder device IVR.

Control tests issued from the Central Office [CO], i.e. from the network analyzer NA, are for instance:
- Single Ended Line Testing [SELT], e.g. reflectometry based; or
- Dual Ended Line Testing [DELT] when the line is in showtime.

The broadband test device or network analyzer NA is further preferably adapted to correlate measurements performed on the broadband installation with the output control and/or input control translated towards the end-user by the responder device IVR.

It is to be noted that the narrowband connection NB and the broadband connection BB may either use the same or a different physical medium to transmit their respective data.

It is also to be noted that the narrowband connection NB may either be a Plain Old Telephone Service [POTS] line or a mobile phone connection.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for testing the physical layer of a broadband installation at subscriber's house by means of a broadband test device (NA) coupled to said subscriber's house through a broadband connection (BB) and so adapted to perform measurements on said broadband installation,
said method comprises the step of allowing an end-user at the subscriber's house to dialog with said broadband test device (NA) through a responder device (IVR),
**characterised in that** said dialog comprising vocal information received from said end-user and translated by said responder device into input control for said broadband test device and output control from said broadband test device translated by said responder device into vocal instructions towards said end-user,
***and in that*** said dialog is set-up by said end-user transmitting vocal information towards said responder device.

2. The method according to claim 1, ***characterized in that*** said method comprises the step of said broadband test device (NA) performing measurements on said broadband installation in accordance with said output control and/or input control translated into vocal instructions and/or from vocal information respectively.

3. The method according to claim 1,
***characterized in that*** said method comprises the step of establishing the dialog between said end-user and said responder device (IVR) via a narrowband connection (NB),
***and in that*** said responder device is a narrowband responder device.

4. The method according to claim 3, ***characterized in that*** said narrowband responder device is coupled to said narrowband connection (NB) via a Local Exchange (LEX).

5. The method according to claim 3, ***characterized in that*** said narrowband connection (NB) and said broadband connection (BB) use the same physical medium.

6. The method according to claim 3, ***characterized in that*** said narrowband connection (NB) and said broadband connection (BB) use a different physical medium.

7. The method according to claim 1, ***characterized in that*** said broadband connection (BB) is a Digital Subscriber Line (DSL).

8. The method according to claim 3, ***characterized in that*** said narrowband connection (NB) is a Plain Old Telephone Service (POTS) line.

9. The method according to claim 3, ***characterized in that*** said narrowband connection (NB) is a mobile phone connection.

10. A telecommunication test system for testing the physical layer of a broadband installation at subscriber's house, said test system having a broadband test device (NA) coupled to said subscriber's house through a broadband connection (BB) and so adapted to perform measurements on said broadband installation,
said telecommunication test system further comprises a responder device (IVR) coupled to said broadband test device (NA) and adapted to exchange vocal messages with an end-user at the subscriber's house, characherised in that said responder device being adapted to translate vocal information received from said end-user into input control for said broadband test device, and to translate output control from said broadband test device into vocal instructions towards said end-user.

11. The telecommunication test system according to claim 10, ***characterized in that*** said telecommunication test system further comprises a narrowband connection adapted to exchange said vocal messages comprising vocal information and vocal instructions.

12. A responder device (IVR) for the telecommunication test system of claim 10,
***characterized in that*** said responder device is a narrowband intelligent voice responder (IVR) adapted to exchange vocal messages with an end-user at the subscriber's house via a narrowband connection (NB).
***and in that*** said responder device is adapted to translate vocal information received from said end-user into input control for said broadband test device, and to translate output control from said broadband test device into vocal instructions towards said end-user.

13. The method according to any of the claims 1 to 9, ***characterized in that*** said method is used in the telecommunication test system as of the claims 10 or 11, and/or with the responder device (IVR) as of claims 12.

## Patentansprüche

1. Ein Verfahren zum Testen der physikalischen Schicht einer Breitbandanlage am Wohnsitz eines Teilnehmers mittels einer über eine Breitbandverbindung (BB) an den besagten Wohnsitz eines Teilnehmers gekoppelten Breitband-Testvorrichtung (NA), welche für das Durchführen von Messungen an der besagten Breitbandanlage ausgelegt ist,
wobei das besagte Verfahren einen Schritt umfasst, in welchem es einem Endbenutzer am Wohnsitz des Teilnehmers möglich ist, über eine Antwortvorrichtung (IVR) mit der besagten Breitband-Testvorrichtung (NA) einen Dialog zu führen,
***dadurch gekennzeichnet,* dass** der besagte Dialog Sprachdaten, welche von dem besagten Endbenutzer empfangen und von der besagten Antwortvorrichtung in eine Eingangssteuerung für die besagte Breitband-Testvorrichtung umgesetzt werden, und eine Ausgangssteuerung von der besagten Breitband-Testvorrichtung, welche von der besagten Antwortvorrichtung in Sprachbefehle für den besagten Endbenutzer umgesetzt werden, umfasst,
***und dass*** der besagte Dialog durch das Übertragen von Sprachdaten durch den Endbenutzer an die besagte Antwortvorrichtung hergestellt wird.

2. Das Verfahren nach Anspruch 1, ***dadurch gekennzeichnet,* dass** das besagte Verfahren den Schritt des Durchführens von Messungen, durch die besagte Breitband-Testvorrichtung (NA), an der besagten Breitbandanlage gemäß der besagten Ausgangssteuerung und/oder der besagten Eingangssteuerung, welche jeweils in Sprachbefehle und/oder von Sprachdaten umgesetzt werden, umfasst.

3. Das Verfahren nach Anspruch 1,
***dadurch gekennzeichnet,* dass** das Verfahren den Schritt des Herstellens eines Dialogs zwischen dem besagten Endbenutzer und der besagten Antwortvorrichtung (IVR) über eine Schmalbandverbindung (NB) umfasst,
***und dass*** die besagte Antwortvorrichtung eine Schmalband-Antwortvorrichtung ist.

4. Das Verfahren nach Anspruch 3, ***dadurch gekennzeichnet,* dass** die besagte Schmalband-Antwortvorrichtung über eine Ortsvermittlungsstelle (LEX) an die besagte Schmalbandverbindung (NB) gekoppelt ist.

5. Das Verfahren nach Anspruch 3, ***dadurch gekennzeichnet,* dass** die besagte Schmalbandverbindung (NB) und die besagte Breitbandverbindung (BB) dasselbe physikalische Medium benutzen.

6. Das Verfahren nach Anspruch 3, ***dadurch gekennzeichnet,* dass** die besagte Schmalbandverbindung (NB) und die besagte Breitbandverbindung (BB) ein unterschiedliches physikalisches Medium benutzen.

7. Das Verfahren nach Anspruch 1, ***dadurch gekennzeichnet,* dass** die besagte Breitbandverbindung (BB) ein digitaler Teilnehmeranschluss (DSL) ist.

8. Das Verfahren nach Anspruch 3, ***dadurch gekennzeichnet,* dass** die besagte Schmalbandverbindung (NB) ein einfacher alter Telefondienstanschluss (POTS) ist.

9. Das Verfahren nach Anspruch 3, ***dadurch gekennzeichnet,* dass** die besagte Schmalbandverbindung (NB) eine Mobilfunk-Verbindung ist.

10. Ein Telekommunikations-Testsystem zum Testen der physikalischen Schicht einer Breitbandanlage am Wohnsitz eines Teilnehmers, wobei das besagte Testsystem eine über eine Breitbandverbindung (BB) an den besagten Wohnsitz eines Teilnehmers gekoppelten Breitband-Testvorrichtung (NA) aufweist, welche für das Durchführen von Messungen an der besagten Breitbandanlage ausgelegt ist,
wobei das besagte Telekommunikationstestsystem weiterhin eine Antwortvorrichtung (IVR) umfasst, welche an die besagte Breitband-Testvorrichtung (NA) gekoppelt und dazu ausgelegt ist, Sprachnachrichten mit einem Endbenutzer am Wohnsitz des Teilnehmers auszutauschen,
***dadurch gekennzeichnet,* dass** die besagte Antwortvorrichtung dazu ausgelegt ist, von einem Endbenutzer empfangene Sprachdaten in eine Eingangssteuerung für die besagte Breitband-Testvorrichtung umzusetzen, und die Ausgangssteuerung von der besagten Breitband-Testvorrichtung in Sprachbefehle für den besagten Endbenutzer umzusetzen.

11. Das Telekommunikations-Testsystem nach Anspruch 10, ***dadurch gekennzeichnet,* dass** das besagte Telekommunikations-Testsystem weiterhin eine Schmalbandverbindung umfasst, welche dazu ausgelegt ist, die besagten Sprachdaten und Sprachbefehle enthaltenden Sprachnachrichten auszutauschen.

12. Eine Antwortvorrichtung (IVR) für das Telekommunikations-Testsystem gemäß Anspruch 10,
***dadurch gekennzeichnet,* dass** die besagte Antwortvorrichtung eine intelligente schmalbandige Sprach-Antwortvorrichtung (IVR) ist, welche dazu ausgelegt ist, Sprachnachrichten über eine Schmalbandverbindung (NB) mit einem Endbenutzer am Wohnsitz des Teilnehmers auszutauschen,
***und dass*** die besagte Antwortvorrichtung dazu ausgelegt ist, von dem besagten Endbenutzer empfangene Sprachdaten in eine Eingangssteuerung für die besagte Breitband-Testvorrichtung umzusetzen, und die Ausgangssteuerung von der Breitband-Testvorrichtung in Sprachbefehle für den besagten Endbenutzer umzusetzen.

13. Das Verfahren nach einem beliebigen der Ansprüche 1 bis 9,
***dadurch gekennzeichnet,* dass** das Verfahren in dem Telekommunikations-Testsystem gemäß Anspruch 10 oder 11 und/oder mit der Antwortvorrichtung (IVR) nach gemäß 12 angewendet wird.

## Revendications

1. Procédé pour tester la couche physique d'une installation à large bande au domicile d'un abonné au moyen d'un dispositif de test à large bande (NA) couplé audit domicile d'un abonné par une connexion à large bande (BB) et adaptée de manière à effectuer des mesures sur ladite installation à large bande,
ledit procédé comprenant l'étape consistant à autoriser un utilisateur final au domicile de l'abonné à dialoguer avec ledit dispositif de test à large bande (NA) à travers un dispositif répondeur (IVR),
***caractérisé en ce que*** ledit dialogue comprend des informations vocales reçues De la part dudit utilisateur final et traduites par ledit dispositif répondeur en commande d'entrée pour ledit dispositif d'essai à large bande et en commande de sortie depuis ledit dispositif d'essai à large bande traduite par ledit dispositif répondeur en instructions vocales pour ledit utilisateur final,
***et en ce que*** ledit dialogue est établi par ledit utilisateur final en transmettant des informations vocales audit dispositif répondeur.

2. Procédé selon la revendication 1, ***caractérisé en ce que*** ledit procédé comprend l'étape consistant à ce que ledit dispositif de test à large bande (NA) effectue des mesures sur ladite installation à large bande conformément à ladite commande de sortie et/ou ladite commande d'entrée traduites en instructions vocales et/ou à partir d'informations vocales respectivement.

3. Procédé selon la revendication 1,
***caractérisé en ce que*** ledit procédé comprend l'étape consistant à établir le dialogue entre ledit utilisateur final et ledit dispositif répondeur (IVR) via une connexion à bande étroite (NB),
***et en ce que*** ledit dispositif répondeur est un dispositif répondeur à bande étroite.

4. Procédé selon la revendication 3, ***caractérisé en ce que*** ledit dispositif répondeur à bande étroite est couplé à ladite connexion à bande étroite (NB) via un centre local (LEX).

5. Procédé selon la revendication 3, ***caractérisé en ce que*** ladite connexion à bande étroite (NB) et ladite connexion à large bande (BB) utilisent le même support physique.

6. Procédé selon la revendication 3, ***caractérisé en ce que*** ladite connexion à bande étroite (NB) et ladite connexion à large bande (BB) utilisent un support physique différent.

7. Procédé selon la revendication 1, ***caractérisé en ce que*** ladite connexion à large bande (BB) est une ligne d'abonné numérique (DSL).

8. Procédé selon la revendication 3, ***caractérisé en ce que*** ladite connexion à bande étroite (NB) est une ligne de service téléphonique classique (POTS).

9. Procédé selon la revendication 3, ***caractérisé en ce que*** ladite connexion à bande étroite (NB) est une connexion de téléphonie mobile.

10. Système de test de télécommunications pour tester la couche physique d'une installation à large bande au domicile d'un abonné, ledit système de test disposant d'un dispositif de test à large bande (NA) couplé audit domicile de l'abonné par une connexion à large bande (BB) et adaptée de manière à effectuer des mesures sur ladite installation à large bande,
ledit système de test de télécommunications comprenant en outre un dispositif répondeur (IVR) couplé audit dispositif de test à large bande (NA) et adapté pour échanger des messages vocaux avec un utilisateur final au domicile de l'abonné,
***caractérisé en ce que*** ledit dispositif répondeur est adapté pour traduire des informations vocales reçues de la part dudit utilisateur final en commande d'entrée pour ledit dispositif de test à large bande, et pour traduire la commande de sortie de la part dudit dispositif de test à large bande en instructions vocales pour ledit utilisateur final.

11. Système de test de télécommunications selon la revendication 10, ***caractérisé en ce que*** ledit système de test de télécommunications comprend en outre une connexion à bande étroite adaptée pour échanger lesdits messages vocaux comprenant des informations vocales et des instructions vocales.

12. Dispositif répondeur (IVR) pour le système de test de télécommunications selon la revendication 10,
***caractérisé en ce que*** ledit dispositif répondeur est un répondeur vocal intelligent à bande étroite (IVR) adapté pour échanger des messages vocaux avec un utilisateur final au domicile de l'abonné via une connexion à bande étroite (NB).
***et en ce que*** ledit dispositif répondeur est adapté pour traduire des informations vocales reçues de la part dudit utilisateur final en commande d'entrée pour ledit dispositif de test à large bande, et pour traduire la commande de sortie depuis ledit dispositif de test à large bande en instructions vocales destinées audit utilisateur final.

13. Procédé selon l'une quelconque des revendications 1 à 9, ***caractérisé en ce que*** ledit procédé est utilisé dans le système de test de télécommunications selon les revendications 10 ou 11, et/ou avec le dispositif répondeur (IVR) selon la revendication 12.
